# EUROPEAN PATENT APPLICATION

(11) **EP 4 745 955 A1**
(43) Date of publication of application: **20.05.2026**
(21) Application number: 25215174.1
(22) Date of filing: 12.11.2025
(51) Int. Cl.: G10K 15/02, B60Q 5/00

(54) **ACOUSTIC SYSTEM HAVING ACOUSTIC VEHICLE ALERTING SYSTEM (AVAS) WITH VEHICLE CABIN SOUND SYSTEM AS AUDIO SOURCE**

(30) Priority: 13.11.2024 US 202418945946
(71) Applicant: Harman Becker Automotive Systems, Inc., Novi, MI 48377 (US)
(72) Inventor: CHEN, Zhijun, Kanagawa, 215-0023 (JP); JIANG, Lintong, Canton, MI, 48187 (US)
(74) Representative: Rummler, Felix

(57) **Abstract**

An acoustic system includes an acoustic vehicle alerting system (AVAS) and a vehicle cabin sound system. The AVAS has an external speaker arrangeable on an exterior portion of a vehicle to output audio alerts of the AVAS for persons in an external environment of the vehicle to hear to be alerted to the presence of the vehicle. An audio source device, such as a radio, audio streaming system, microphone, etc., of the vehicle cabin sound system is arranged as an audio source of the AVAS. The audio source device generates or receives an audio sound typically outputted by the vehicle cabin sound system for persons in an interior portion of the vehicle to hear. As the audio source device is arranged as an audio source of the AVAS, the external speaker may output the audio sound of the audio source device for persons in the external environment to hear.

## Description

### TECHNICAL FIELD

The present disclosure relates to acoustic vehicle alerting systems and to vehicle cabin sound systems.

### BACKGROUND

An acoustic vehicle alerting system (AVAS) is a sound-emitting system for electrified vehicles. Electrified vehicles are typically quieter than conventional internal combustion engine (ICE) vehicles. The AVAS alerts pedestrians, cyclists, and other road users to the presence of these relatively quiet vehicles, particularly at lower speeds when engine and/or other mechanical noises are non-existent or minimal.

Other systems which function like an AVAS include an approaching vehicle sound for pedestrians (VSP) system and an electric vehicle warning sound system (EVWSS). A common task provided by such systems (collectively "AVAS" herein) is one way audio notification from within the vehicle to the external environment of the vehicle to alert persons within the vicinity of the vehicle that the vehicle is approaching.

An AVAS includes a collection of hardware devices installed in a vehicle to provide audio sound for persons in the external environment of the vehicle to hear to be alerted to the presence of the vehicle. These devices include a controller, an audio source device such as a sound generator, and an audio output device in the form of a speaker. In operation, the controller receives information indicative of the status of the vehicle, such as speed, acceleration, transmission mode, etc., and generates a control signal indicative of a desired audio sound to be outputted based on the vehicle status. The sound generator generates an audio signal according to the control signal. The speaker, which is an "external speaker" as it is mounted to an exterior portion of the vehicle, is driven with the audio signal to output the desired audio sound for persons in the external environment of the vehicle to hear.

A cabin sound system of a vehicle includes a collection of hardware devices installed in a cabin of the vehicle to provide audio and video entertainment and information for persons in the vehicle cabin. These devices include an audio source device such as a radio, an audio amplifier, and an audio output device in the form of a speaker. In operation, the audio source device (e.g., the radio) provides an audio signal to the audio amplifier, the audio amplifier amplifies the audio signal, and the speaker, which is mounted to an interior portion of the vehicle cabin, is driven with the amplified audio signal to output a corresponding audio sound for persons in the vehicle cabin to hear (e.g., the audio sound outputted being the audio sound of the radio). For reference, other audio source devices of the cabin sound system may include CD and DVD players, televisions, automotive navigation systems, video players, cameras, navigation systems, telephone integration and audio streaming systems, and smartphone controllers.

### SUMMARY

An acoustic system includes an acoustic vehicle alerting system (AVAS) having a speaker mountable to an exterior portion of a vehicle. The acoustic system further includes a vehicle cabin sound system having an audio source device arranged as an audio source for the speaker.

The audio source device may be a radio. In this case, the speaker is configured to output an audio sound of the radio so that a person in an external environment of the vehicle can hear the radio.

The audio source device may be a microphone. In this case, the speaker is configured to output an audio sound of a person in the vehicle talking into the microphone so that a person in an external environment of the vehicle can hear the person in the vehicle talking.

The audio source device may be an audio streaming system. In this case, the speaker is configured to output an audio sound of the audio streaming system so that a person in an external environment of the vehicle can hear the audio streaming system.

The audio source device may be an audio source device of a navigation system, a video player, a camera, a CD player, a DVD player, a telephone system, or a smartphone controller.

The acoustic system may further include a sound sensor mountable to an exterior portion of the vehicle and the vehicle cabin sound system may further include a speaker. The speaker of the vehicle cabin sound system may be configured to output an audio sound of a person in an external environment of the vehicle talking into the sound sensor so that a person in the vehicle can hear the person in the external environment of the vehicle talking. The sound sensor may be a microphone or a sound vibration sensor.

The vehicle cabin sound system may further include a microphone. The speaker of the AVAS may be configured to output an audio sound of a person in the vehicle talking into the microphone so that a person in an external environment of the vehicle can hear the person in the vehicle talking.

The vehicle cabin sound system may be in communication with an artificial intelligence (AI) agent. The speaker may be configured to output an audio sound of the AI agent so that a person in an external environment of the vehicle can hear the AI agent. The AI agent may be either on-board with the vehicle cabin sound system or off board from the vehicle cabin sound system.

The acoustic system may further include a sound sensor mountable to an exterior portion of the vehicle, and the vehicle cabin sound system may be configured to receive from the sound sensor an audio signal of the person in the external environment of the vehicle talking into the sound sensor, convert the audio signal into a command, and provide the command to the AI agent.

The vehicle cabin sound system may be configured to receive a response to the command from the AI agent and convert the command into a second audio sound. The speaker may be configured to output the second audio sound so that the person in the external environment of the vehicle can hear the response to the command from the AI agent.

An AVAS for a vehicle includes a controller, a sound generator, and an external speaker. The controller is configured to generate a control signal indicative of a desired audio sound to be outputted for persons in an external environment of the vehicle to hear to be alerted to a presence of the vehicle. The sound generator is configured to generate a first audio signal according to the control signal. The external speaker is mountable to an exterior portion of the vehicle. The external speaker is configured to be driven with the first audio signal to output a first audio sound corresponding to the first audio signal for persons in the external environment of the vehicle to hear. The external speaker is further configured to be driven with a second audio signal of an audio source device of a sound system of a cabin of the vehicle to output a second audio sound corresponding to the second audio signal for persons in the external environment of the vehicle to hear.

The audio source device of the sound system of the cabin of the vehicle may be a radio or an audio streaming system.

The audio source device of the cabin sound system may be an internal microphone that is arrangeable within the cabin of the vehicle and is configured to convert an audio talking sound from a person in the cabin into the second audio signal whereby a person in the external environment of the vehicle can hear the person in the cabin talking via the external speaker.

The AVAS may further include an external sound sensor that is mountable to an exterior portion of the vehicle and is configured to convert an audio talking sound from the person in the external environment into a third audio signal and provide the third audio signal to the cabin sound system whereby the person in the cabin can hear the person in the external environment talking via the cabin sound system.

A system includes a sound generator for generating an alert, an external speaker mountable to an exterior portion of a vehicle, and an audio source device for generating an audio sound to be heard by persons in an interior portion of the vehicle. The audio source device may be a radio or an audio streaming system. The external speaker is configured to output the alert for persons in an external environment of the vehicle to hear to be alerted to a presence of the vehicle. The external speaker is further configured to output the audio sound for persons in the external environment to hear.

The system may further include an internal microphone mountable to an interior portion of the vehicle. The internal microphone is configured to receive an audio sound of a person in the interior portion of the vehicle talking into the internal microphone. The external speaker may be configured to output the audio sound of the person in the interior portion of the vehicle talking into the internal microphone for a person in the external environment of the vehicle to hear the person in the interior portion of the vehicle talking.

The system may further include an external microphone mountable to the exterior portion of the vehicle and an internal speaker mountable to the interior portion of the vehicle. The external microphone is configured to receive an audio sound of the person in the external environment of the vehicle talking into the external microphone. The internal speaker is configured to output the audio sound of the person in the external environment of the vehicle talking into the external microphone for the person in the interior portion of the vehicle to hear the person in the external environment of the vehicle talking.

The internal speaker may be configured to output the audio sound of the audio source device for the person in the interior portion of the vehicle to hear.

### BRIEF DESCRIPTION OF THE DRAWINGS

FIG. 1 illustrates a schematic diagram of an acoustic vehicle alerting system (AVAS) of an electrified vehicle in which the AVAS is in operation to provide audio sound for persons in the external environment of the vehicle to hear to be alerted to the presence of the vehicle;
FIG. 2 illustrates a block diagram of the AVAS, the AVAS having a controller, an audio source device in the form of a sound generator, and an external speaker that is mounted to an exterior portion of the vehicle;
FIG. 3 illustrates a block diagram of an acoustic system having the AVAS with an audio source device of a cabin sound system of the vehicle being an audio source of the AVAS, whereby an audio sound corresponding to an audio signal of the audio source device of the cabin sound system is outputted by the external speaker of the AVAS for persons in the external environment of the vehicle to hear;

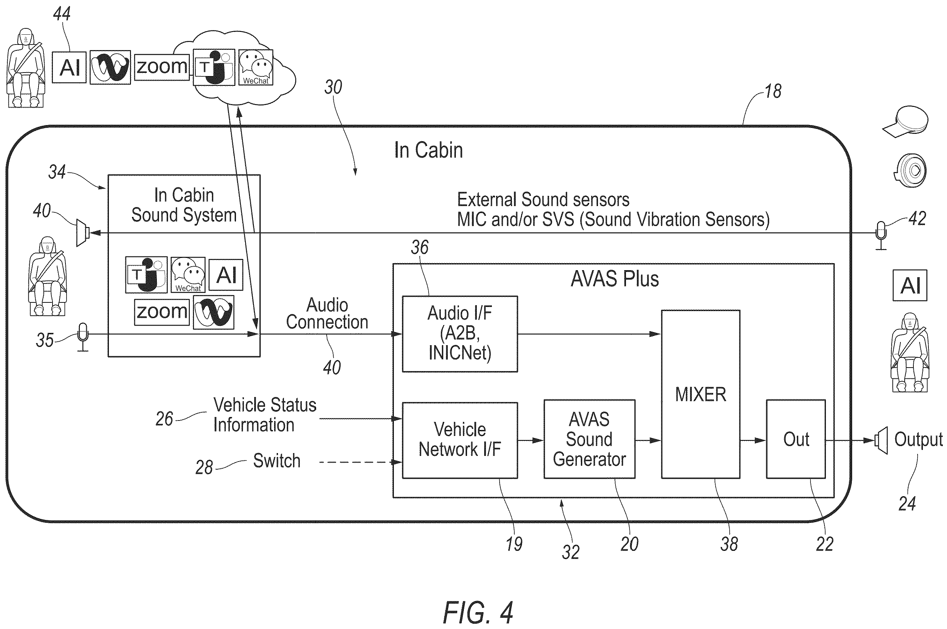

FIG. 4 illustrates a block diagram of an acoustic system having the AVAS with an audio input device of the cabin sound system of the vehicle being an audio source of the AVAS and with the cabin sound system further having an audio output device and an external audio input device that is mounted to an exterior portion of the vehicle, whereby persons in the external environment of the vehicle can talk with persons within the vehicle cabin via the audio input and output devices of the cabin sound system and the external speaker of the AVAS, and whereby persons in the external environment of the vehicle can talk with a service provider in communication with the cabin sound system via the external audio input device of the cabin sound system and the external speaker of the AVAS;
FIG. 5A illustrates a block diagram depicting operations of the cabin sound system and the AVAS in which the cabin sound system and the AVAS are arranged as separate systems; and
FIG. 5B illustrates a block diagram depicting operations of the cabin sound system and the AVAS in which the cabin sound system is arranged as an audio source of the AVAS.

### DETAILED DESCRIPTION

Detailed embodiments of the present disclosure are disclosed herein; however, it is to be understood that the disclosed embodiments are merely exemplary of the present disclosure that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present disclosure.

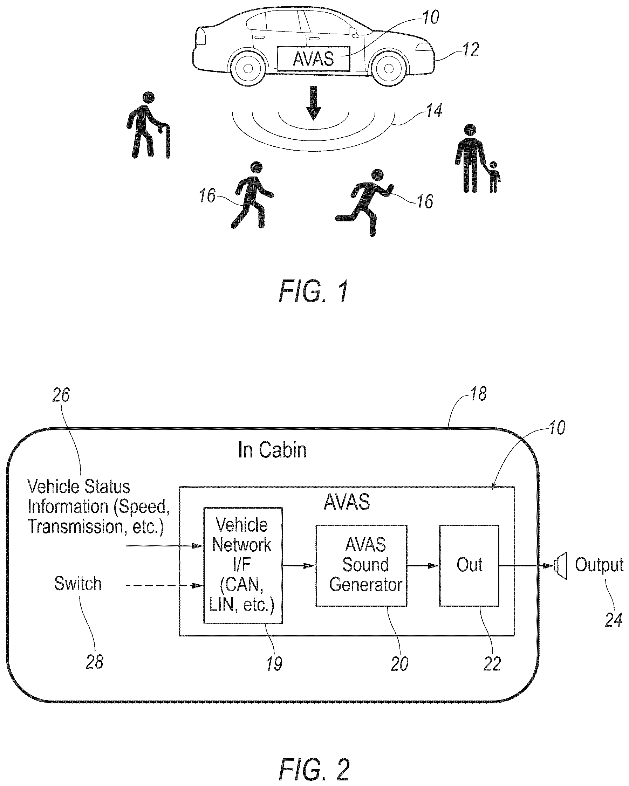

Referring now to FIG. 1, a schematic diagram of an acoustic vehicle alerting system (AVAS) 10 of an electrified vehicle ("EV") 12 in which the AVAS is in operation is shown. As indicated in FIG. 1, AVAS 10 is installed on EV 12. In FIG. 1, AVAS 10 is in operation to provide an audio sound 14 for persons 16 in an external environment of EV 12 to hear to be alerted to the presence of the EV. EV 12, for instance, is a battery only electric vehicle (BEV) or a hybrid electric vehicle (HEV).

Referring now to FIG. 2, with continual reference to FIG. 1, a block diagram of AVAS 10 is shown. As indicated above, AVAS 10 is installed on EV 12. As shown in FIG. 2, AVAS 10 may be installed within a cabin 18 of EV 12. Occupant persons of EV 12 sit within cabin 18 during operation of the EV.

AVAS 10 includes a collection of hardware devices to provide audio sound for persons 16 in the external environment of EV 12 to hear to be alerted to the presence of the EV. As shown in FIG. 2, these hardware devices of AVAS 10 include a controller 19, an audio source device 20, and an output amplifier 22 having an audio output device 24 connected thereto.

Controller 19 is an electronic controller that may include any variety of electronic processing devices, memory devices, input/output (I/O) devices, and/or other known hardware components, and may perform various control and/or communication related functions. Such control related functions performed by controller 19 include generating control signals indicative of desired audio sounds to be outputted from speaker 24 (described in further detail below). Such communication related functions performed by controller 19 include receiving information 26 indicative of a status of EV 12 such as speed, acceleration, transmission mode, etc., from communications networks and/or sensors of the EV.

In performing such communication related functions, controller 19 acts as a vehicle network interface (I/F). As such, controller 19 is labeled as "Vehicle Network I/F". Communications networks of EV 12 may include a controller area network (CAN), a local interconnect network (LIN), and the like. As such, controller 19 is further labeled in FIG. 2 with the terminology "CAN, LIN, etc."

Audio source device 20 is in the form of an audio sound generator. Sound generator 20 is configured to generate audio signals of audio sounds to be provided by AVAS 10 for persons 16 in the external environment of EV 12 to hear.

Audio output device 24, which is connected to output amplifier 22, is in the form of a speaker. Speaker 24 is mounted to an exterior portion of EV 12. Hence, as shown in FIGS. 2, 3, and 4, speaker 24 is not installed within cabin 18 of EV 12. Speaker 24 is thus regarded as an "external speaker". External speaker 24 outputs audio sounds provided by AVAS 10 for persons 16 in the external environment of EV 12 to hear. Of course, although only one external speaker 24 is shown, AVAS 10 may include other external speakers.

In operation, controller 19 generates a control signal indicative of a desired audio sound to be outputted based on vehicle status information 26. Sound generator 20 generates an audio signal according to the control signal. Output amplifier 22 amplifies the audio signal. External speaker 24 is driven with the audio signal, as amplified by output amplifier 22, to output the desired audio sound for persons 16 in the external environment of EV 12 to hear.

Controller 19 may further have a switch control 28 such as to turn off the AVAS sound when EV 12 is traveling faster than a predetermined speed. For instance, switch control 28 is employed when EV 12 is traveling at freeway speeds which assumes that there would be no pedestrians on the freeway. Of course, switch control 28 is optional and may therefore not be provided. Additionally, or alternatively, a control signal to turn on the AVAS sound and/or a control signal to turn off the AVAS sound may be provided to with vehicle status information 26 directly to controller 19.

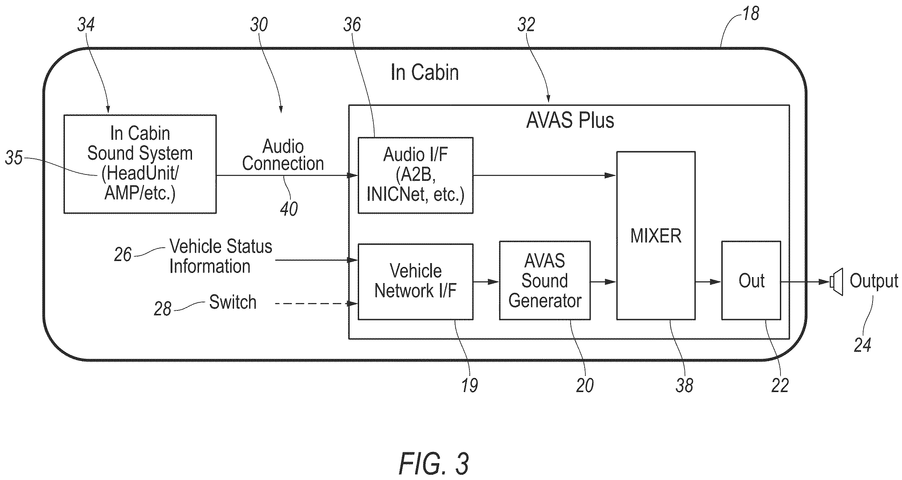

Referring now to FIG. 3, with continual reference to FIGS. 1 and 2, a block diagram of an acoustic system 30 is shown. Acoustic system 30 includes an AVAS 32 (labeled "AVAS Plus"). AVAS 32 is operable to provide the functionality provided by AVAS 10. As such, AVAS 32 includes controller 19, sound generator 20, and output amplifier 22 with external speaker 24 connected thereto to provide audio sound for persons 16 in the external environment of EV 12 to hear to be alerted to the presence of the EV.

As indicated in FIG. 3, a sound system 34 is in cabin 18 of EV 12. Cabin sound system 34 is a typical sound system found in vehicle cabins. As such, cabin sound system 34 has an audio source device 35 (e.g., radio, audio receiver, stereo, etc.) and a set of cabin speakers. The cabin speakers convert audio signals provided by audio source device 35 of cabin sound system 34 into audio sounds for persons within cabin 18 to hear. (Audio source device 35 is designated in FIG. 3 as being a part of the "HeadUnit/AMP/etc." labeled portion of cabin sound system 34 ("AMP" being an acronym for "audio amplifier").)

In acoustic system 30, audio source device 35 of cabin sound system 34 is arranged as an audio source of AVAS 32. In this way, external speaker 24 outputs an audio sound corresponding to an audio signal provided by audio source device 35 for persons 16 in the external environment of EV 12 to hear. For instance, in the case of audio source device 35 being a radio of cabin sound system 34, external speaker 24 outputs an audio sound corresponding to an audio signal provided by the radio for persons 16 in the external environment of EV 12 to hear.

In further detail, AVAS 32 further includes an audio interface (I/F) 36 and a mixer 38. Audio interface 36 is connected via an audio connection 40 to audio source device 35. In operation, audio interface 36 obtains an audio signal provided by audio source device 35 via audio connection 40. Audio connection 40 may be arranged, for example, as an automotive audio bus (A2B), a media-oriented system transport (MOST) bus, an INICnet^{™} bus, an Ethernet bus, a Sony/Philips Digital Interface (SPDIF) interface, or analog network connection.

Mixer 38 is in communication with audio interface 36 to receive the audio signal of audio source device 35 obtained by the audio interface. In operation, mixer 38 provides the audio signal of audio source device 35 to output amplifier 22. Output amplifier 22 amplifies the audio signal. External speaker 24 is driven with the audio signal, as amplified by output amplifier 22, to output an audio sound corresponding to the audio signal for persons 16 in the external environment of EV 12 to hear. For example, in the case of audio source device 35 being a radio, external speaker 24 is driven with the amplified audio signal of radio 35 to output the audio sound of the radio for persons 16 in the external environment of EV 12 to hear.

Of course, other audio source devices of cabin sound system 34 at respective times may be arranged as an audio source of AVAS 32. In this way, in cabin music, in cabin news, in cabin audio books, etc., provided by audio source devices of cabin sound system 34 (which conventionally are outputted by the cabin sound system for being heard by persons in cabin 18) can be outputted from AVAS 32 for being heard by persons 16 in the external environment of EV 12. Another example includes in cabin voice (e.g., a person in cabin 18 talking), provided by a microphone of cabin sound system 34, being outputted from AVAS 32 for being heard by persons 16 in the external environment of EV 12 (i.e., the person in cabin 18 can one-way talk to a person 16 in the external environment of the EV). Other examples include in cabin interrupt, such as weather information, message/call notify, point of interest (POI) information, etc., from cabin sound system 34, being outputted from AVAS 32 for being heard by persons 16 in the external environment of EV 12.

Referring now to FIG. 4, with continual reference to FIGS. 1, 2, and 3, a block diagram of acoustic system 30 according to another variation is shown. Acoustic system 30 includes the same AVAS 32 shown in FIG. 3 with an audio input device 35 of cabin sound system 34 being arranged as an audio source of the AVAS.

As indicated with a corresponding symbol in FIG. 4, audio input device 35 is a microphone. Microphone 35 is mounted to an interior portion of cabin 18 (i.e., the microphone is installed within the cabin). Microphone 35 is thus regarded as an "internal microphone". Internal microphone 35 outputs audio signals of audio sounds from a person within cabin 18 talking into the microphone. Of course, although only one internal microphone 35 is shown, cabin sound system 34 may further include other internal microphones which can be arranged as audio sources of AVAS 32.

In the variation of acoustic system 30 shown in FIG. 4, cabin sound system 34 further has an audio output device 40. As indicated with a corresponding symbol in FIG. 4, audio output device 40 is a speaker. Speaker 40 is mounted to an interior portion of cabin 18, i.e., the speaker is installed within the cabin in like fashion as the cabin speakers. Speaker 40 is thus regarded as an "internal speaker". Of course, although only one internal speaker 40 is shown, cabin sound system 34 may further include other internal speakers. Further, a cabin speaker may be considered as being internal speaker 40.

In the variation of acoustic system 30 shown in FIG. 4, the acoustic system further has an audio input device 42. Audio input device 42 is in communication with cabin sound system 34. Audio input device 42 is a sound sensor such as in the form of a microphone or sound vibration sensor which enable exterior vehicle speech recognition and acoustic sensing. As indicated with a corresponding symbol in FIG. 4, audio input device 42 is in the form of a microphone. Microphone 42 is mounted to an exterior portion of EV 12. Hence, microphone 42 is not installed within cabin 18. Microphone 42 is thus regarded as an "external microphone". As external microphone 42 is in communication with cabin sound system 34, the external microphone may be considered as part of the cabin sound system just like internal microphone 35. Further, although only one external microphone 42 is shown, acoustic system 30 may include other external microphones.

In operation, a person within cabin 18 and a person 16 in the external environment of EV 12 can talk with each other via the audio input and output devices 35, 40, and 42 of cabin sound system 34 and the audio output device 24 of AVAS 30. Particularly, internal microphone 35 receives an audio sound of a person within cabin 18 talking into the internal microphone. External speaker 24 outputs the audio sound of the in-cabin person talking into interior microphone 35 for the external environment person to hear the in-cabin person talking. External microphone 42 receives an audio sound of the external environment person talking into the external microphone. Internal speaker 40 outputs the audio sound of the external environment person talking into external microphone 42 for the in-cabin person to hear the external environment person talking.

Such talking communication between the in-cabin person and the external environment person may be part of a communications service facilitated by a service provider such as Zoom, WeChat, Microsoft Teams, WebEx, etc., communication services.

Further in the variation of acoustic system 30 shown in FIG. 4, cabin sound system 34 may be in communication with an artificial intelligence (AI) agent 44. AI agent 44 may be either on-board with cabin sound system 34 or off board from the cabin sound system. In operation, internal speaker 40 outputs an audio sound of AI agent 44 so that the in-cabin person can hear the AI agent. Cabin sound system 34 receives from external microphone 42 an audio signal of the external environment person talking into the external microphone, converts the audio signal into a command, and provides the command to AI agent 44. Cabin sound system 34 receives a response to the command from AI agent 44 and converts the command into an audio sound. External speaker 24 outputs the audio sound so that the external environment person can hear the response to the command from AI agent 44.

In this way, persons 16 in the external environment of EV 12 can talk with a service provider (e.g., AI agent 44) in communication with cabin sound system 34 via external microphone 42 and external speaker 24.

As set forth, acoustic system 30 enables the following use cases: support external environment of EV 12 to do Webex/Teams/WeChat/Zoom communications; create in cabin and external environment talk condition (person to person); enable external environment talking with in Cabin AI or cloud AI; and enable external environment control or talking with in Cabin service or cloud service and obtain response of the service.

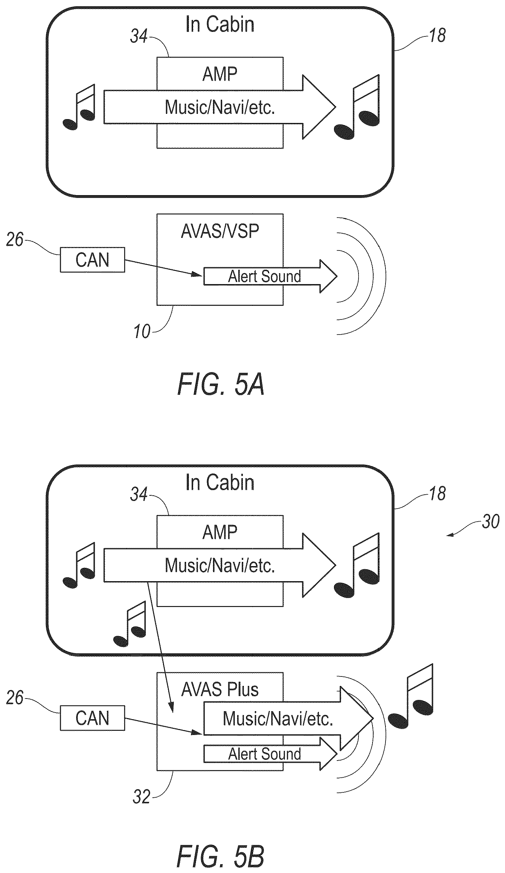

Referring now to FIGS. 5A and 5B, respective block diagrams are shown. The block diagram of FIG. 5A depicts operations of cabin sound system 34 and AVAS 10 in which the cabin sound system and AVAS 10 are arranged as separate systems is shown. The block diagram of FIG. 5B depicts operations of cabin sound system 34 and AVAS 32 in which the cabin sound system is arranged as an audio source of AVAS 32 according to acoustic system 30 as described above.

As described, an acoustic system in accordance with the present disclosure includes an AVAS for a vehicle in which an audio source device of a cabin sound system of the vehicle is arranged as an audio source for the AVAS.

As further described, with an audio source device of the cabin sound system of the vehicle being arranged as an audio source for the AVAS, the acoustic system may have the following functionality to make the AVAS more useful and to benefit the end users: play music, such as when holding a party near the vehicle; notify the vehicle the driver that some thing or someone was left in the vehicle; connect in cabin direct messages, share in cabin information, or notify to external environment; perform certification with talk based check, to open or control the vehicle; notify to external environment more resourceful information like weather change; discuss/talk between persons in the vehicle and persons in the external environment; discuss/talk with vehicle AI and service providers; do remote meeting from the external environment of the vehicle; and can control vehicle service from the external environment like pre-heating, pre-cooling, and so on.

While exemplary embodiments are described above, it is not intended that these embodiments describe all possible forms of the present disclosure. Rather, the words used in the specification are words of description rather than limitation, and it is understood that various changes may be made without departing from the spirit and scope of the present disclosure. Additionally, the features of various implementing embodiments may be combined to form further embodiments of the present disclosure.

The following examples pertain to further claimed or unclaimed features. Any of the described examples which do not fully correspond to the invention as defined in the claims is thus not according to the invention and present for illustration purposes only or to highlight specific aspects or features of the claims.

Example 1: An acoustic system comprising: an acoustic vehicle alerting system (AVAS) having a speaker mountable to an exterior portion of a vehicle; and a vehicle cabin sound system having an audio source device arranged as an audio source for the speaker.

Example 2: The acoustic system of example 1, wherein: the audio source device is a radio; and the speaker is configured to output an audio sound of the radio so that a person in an external environment of the vehicle can hear the radio.

Example 3: The acoustic system of example 1 or 2, wherein: the audio source device is a microphone; and the speaker is configured to output an audio sound of a person in the vehicle talking into the microphone so that a person in an external environment of the vehicle can hear the person in the vehicle talking.

Example 4: The acoustic system of any of examples 1 to 3, wherein: the audio source device is an audio streaming system; and the speaker is configured to output an audio sound of the audio streaming system so that a person in an external environment of the vehicle can hear the audio streaming system.

Example 5: The acoustic system of any of examples 1 to 4, wherein: the audio source device is an audio source device of a navigation system, a video player, a camera, a CD player, a DVD player, a telephone system, or a smartphone controller.

Example 6: The acoustic system of any of examples 1 to 5, further comprising: a sound sensor mountable to an exterior portion of the vehicle; and wherein the vehicle cabin sound system further includes a speaker, the speaker of the vehicle cabin sound system being configured to output an audio sound of a person in an external environment of the vehicle talking into the sound sensor so that a person in the vehicle can hear the person in the external environment of the vehicle talking.

Example 7: The acoustic system of example 6, wherein: the vehicle cabin sound system further includes a microphone; and the speaker of the AVAS is configured to output an audio sound of a person in the vehicle talking into the microphone so that a person in an external environment of the vehicle can hear the person in the vehicle talking.

Example 8: The acoustic system of example 6 or 7, wherein: the sound sensor is a microphone or a sound vibration sensor.

Example 9: The acoustic system of any of examples 1 to 8, wherein: the vehicle cabin sound system is in communication with an artificial intelligence (AI) agent; and the speaker is configured to output an audio sound of the AI agent so that a person in an external environment of the vehicle can hear the AI agent.

Example 10: The acoustic system of example 9, wherein: the AI agent is either on-board with the vehicle cabin sound system or is off board from the vehicle cabin sound system.

Example 11: The acoustic system of example 9 or 10, further comprising: a sound sensor mountable to an exterior portion of the vehicle; and the vehicle cabin sound system is configured to receive from the sound sensor an audio signal of the person in the external environment of the vehicle talking into the sound sensor, convert the audio signal into a command, and provide the command to the AI agent.

Example 12: The acoustic system of example 11, wherein: the vehicle cabin sound system is further configured to receive a response to the command from the AI agent and convert the command into a second audio sound; and the speaker is configured to output the second audio sound so that the person in the external environment of the vehicle can hear the response to the command from the AI agent.

Example 13: An acoustic vehicle alerting system (AVAS) for a vehicle, the AVAS comprising: a controller configured to generate a control signal indicative of a desired audio sound to be outputted for persons in an external environment of the vehicle to hear to be alerted to a presence of the vehicle; a sound generator configured to generate a first audio signal according to the control signal; an external speaker mountable to an exterior portion of the vehicle, the external speaker being configured to be driven with the first audio signal to output a first audio sound corresponding to the first audio signal for persons in the external environment of the vehicle to hear; and the external speaker being further configured to be driven with a second audio signal of an audio source device of a sound system of a cabin of the vehicle to output a second audio sound corresponding to the second audio signal for persons in the external environment of the vehicle to hear.

Example 14: The AVAS of example 13, wherein: the audio source device of the sound system of the cabin of the vehicle is a radio or an audio streaming system.

Example 15. The AVAS of example 13 or 14, wherein: the audio source device of the sound system of the cabin is an internal microphone that is arrangeable within the cabin of the vehicle and is configured to convert an audio talking sound from a person in the cabin into the second audio signal whereby a person in the external environment of the vehicle can hear the person in the cabin talking via the external speaker.

Example 16: The AVAS of example 15, further comprising: an external sound sensor that is mountable to an exterior portion of the vehicle and is configured to convert an audio talking sound from the person in the external environment into a third audio signal and provide the third audio signal to the sound system of the cabin whereby the person in the cabin can hear the person in the external environment talking via the sound system of the cabin.

Example 17: A system comprising: a sound generator for generating an alert; an external speaker mountable to an exterior portion of a vehicle, the external speaker being configured to output the alert for persons in an external environment of the vehicle to hear to be alerted to a presence of the vehicle; an audio source device for generating an audio sound to be heard by persons in an interior portion of the vehicle, the audio source device being a radio or an audio streaming system; and the external speaker being further configured to output the audio sound for persons in the external environment to hear.

Example 18: The system of example 17, further comprising: an internal microphone mountable to the interior portion of the vehicle, the internal microphone being configured to receive an audio sound of a person in the interior portion of the vehicle talking into the internal microphone; and the external speaker being further configured to output the audio sound of the person in the interior portion of the vehicle talking into the internal microphone for a person in the external environment of the vehicle to hear the person in the interior portion of the vehicle talking.

Example 19. The system of example 18, further comprising: an external microphone mountable to the exterior portion of the vehicle, the external microphone being configured to receive an audio sound of the person in the external environment of the vehicle talking into the external microphone; and an internal speaker mountable to the interior portion of the vehicle, the internal speaker being configured to output the audio sound of the person in the external environment of the vehicle talking into the external microphone for the person in the interior portion of the vehicle to hear the person in the external environment of the vehicle talking.

Example 20: The system of example 19, wherein: the internal speaker is further configured to output the audio sound of the audio source device for the person in the interior portion of the vehicle to hear.

## Claims

1. An acoustic system comprising:
an acoustic vehicle alerting system (AVAS) having a speaker mountable to an exterior portion of a vehicle; and
a vehicle cabin sound system having an audio source device arranged as an audio source for the speaker.

2. The acoustic system of claim 1 wherein:
the audio source device is a radio; and
the speaker is configured to output an audio sound of the radio so that a person in an external environment of the vehicle can hear the radio.

3. The acoustic system of claim 1 wherein:
the audio source device is a microphone; and
the speaker is configured to output an audio sound of a person in the vehicle talking into the microphone so that a person in an external environment of the vehicle can hear the person in the vehicle talking.

4. The acoustic system of claim 1 wherein:
the audio source device is an audio streaming system; and
the speaker is configured to output an audio sound of the audio streaming system so that a person in an external environment of the vehicle can hear the audio streaming system.

5. The acoustic system of claim 1 further comprising:
a sound sensor mountable to an exterior portion of the vehicle; and
wherein the vehicle cabin sound system further includes a speaker, the speaker of the vehicle cabin sound system being configured to output an audio sound of a person in an external environment of the vehicle talking into the sound sensor so that a person in the vehicle can hear the person in the external environment of the vehicle talking.

6. The acoustic system of claim 5 wherein:
the vehicle cabin sound system further includes a microphone; and
the speaker of the AVAS is configured to output an audio sound of a person in the vehicle talking into the microphone so that a person in an external environment of the vehicle can hear the person in the vehicle talking.

7. The acoustic system of claim 1 wherein:
the vehicle cabin sound system is in communication with an artificial intelligence (AI) agent; and
the speaker is configured to output an audio sound of the AI agent so that a person in an external environment of the vehicle can hear the AI agent.

8. The acoustic system of claim 7 further comprising:
a sound sensor mountable to an exterior portion of the vehicle; and
the vehicle cabin sound system is configured to receive from the sound sensor an audio signal of the person in the external environment of the vehicle talking into the sound sensor, convert the audio signal into a command, and provide the command to the AI agent.

9. The acoustic system of claim 8 wherein:
the vehicle cabin sound system is further configured to receive a response to the command from the AI agent and convert the command into a second audio sound; and
the speaker is configured to output the second audio sound so that the person in the external environment of the vehicle can hear the response to the command from the AI agent.

10. An acoustic vehicle alerting system (AVAS) for a vehicle, the AVAS comprising:
a controller configured to generate a control signal indicative of a desired audio sound to be outputted for persons in an external environment of the vehicle to hear to be alerted to a presence of the vehicle;
a sound generator configured to generate a first audio signal according to the control signal;
an external speaker mountable to an exterior portion of the vehicle, the external speaker being configured to be driven with the first audio signal to output a first audio sound corresponding to the first audio signal for persons in the external environment of the vehicle to hear; and
the external speaker being further configured to be driven with a second audio signal of an audio source device of a sound system of a cabin of the vehicle to output a second audio sound corresponding to the second audio signal for persons in the external environment of the vehicle to hear.

11. The AVAS of claim 10 wherein:
the audio source device of the sound system of the cabin is an internal microphone that is arrangeable within the cabin of the vehicle and is configured to convert an audio talking sound from a person in the cabin into the second audio signal whereby a person in the external environment of the vehicle can hear the person in the cabin talking via the external speaker.

12. The AVAS of claim 11 further comprising:
an external sound sensor that is mountable to an exterior portion of the vehicle and is configured to convert an audio talking sound from the person in the external environment into a third audio signal and provide the third audio signal to the sound system of the cabin whereby the person in the cabin can hear the person in the external environment talking via the sound system of the cabin.

13. A system comprising:
a sound generator for generating an alert;
an external speaker mountable to an exterior portion of a vehicle, the external speaker being configured to output the alert for persons in an external environment of the vehicle to hear to be alerted to a presence of the vehicle;
an audio source device for generating an audio sound to be heard by persons in an interior portion of the vehicle, the audio source device being a radio or an audio streaming system; and
the external speaker being further configured to output the audio sound for persons in the external environment to hear.

14. The system of claim 13 further comprising:
an internal microphone mountable to the interior portion of the vehicle, the internal microphone being configured to receive an audio sound of a person in the interior portion of the vehicle talking into the internal microphone; and
the external speaker being further configured to output the audio sound of the person in the interior portion of the vehicle talking into the internal microphone for a person in the external environment of the vehicle to hear the person in the interior portion of the vehicle talking.

15. The system of claim 14 further comprising:
an external microphone mountable to the exterior portion of the vehicle, the external microphone being configured to receive an audio sound of the person in the external environment of the vehicle talking into the external microphone; and
an internal speaker mountable to the interior portion of the vehicle, the internal speaker being configured to output the audio sound of the person in the external environment of the vehicle talking into the external microphone for the person in the interior portion of the vehicle to hear the person in the external environment of the vehicle talking, the internal speaker being further configured to output the audio sound of the audio source device for the person in the interior portion of the vehicle to hear.
